# EUROPÄISCHE PATENTSCHRIFT

(11) **EP 2 989 324 B1**
(45) Veröffentlichungstag und Bekanntmachung des Hinweises auf die Patenterteilung: **06.03.2019**
(21) Anmeldenummer: 14735843.6
(22) Anmeldetag: 18.03.2014
(51) Int. Cl.: F03D 17/00, F03D 1/06

(54) **WINDKRAFTANLAGE MIT MESSEINRICHTUNG**
WIND TURBINE HAVING A MEASURING DEVICE
ÉOLIENNE À DISPOSITIF DE MESURE

(30) Priorität: 24.04.2013 DE 102013007088
(43) Veröffentlichungstag der Anmeldung: 02.03.2016
(73) Patentinhaber: SSB Wind Systems GmbH & Co. KG, 48499 Salzbergen (DE)
(72) Erfinder: KÖTTING, Norbert, 48485 Neuenkirchen (DE)
(74) Vertreter: Bossmeyer, Jörg Peter
(86) Internationale Anmeldenummer: PCT/EP2014/000737
(87) Internationale Veröffentlichungsnummer: WO 2014/173483

(56) Entgegenhaltungen:
- EP-A1- 2 453 136
- DE-A1- 3 729 102
- DE-A1-102010 056 033

## Beschreibung

Die Erfindung betrifft eine Windkraftanlage entsprechend dem Anspruch 1, ferner ein Verfahren zur Justierung und Ausrichtung der Messeinrichtung der Windkraftanlage entsprechend dem Anspruch 9.

Die Messung der beim Betrieb auftretenden Belastungen und Verformungen von Bauelemente einer Windkraftanlage erfolgt meist über Messeinrichtungen, die Teil mindestens einer Sende / Empfangseinrichtung und entfernt dazu angeordneten Reflektoreinrichtungen sind. Von der Sendeeinrichtung werden Signale zu einem Reflektor gesendet und von diesem reflektiert und zu der ebenfalls im Abstand zum Reflektor angeordneten Empfängereinrichtung gesendet. Im Empfänger werden die reflektierten Signale ausgewertet und ggf. über eine Recheneinheit in Messwerte umgesetzt.

Bei der Messeinrichtung kann es sich z. B. um eine sogenannte berührungslose Abstandsmesseinrichtung in Form eines Lasers, einer Kamera oder ähnlicher Anordnungen handeln. Bei den Signalen kann es sich um optische, Sonare-, Laser- oder elektromagnetische Signale handeln. Bei dem Reflektor handelt es sich meist um einen sog. Retroreflektor, der symmetrisch um die jeweilige Achse am Einbauort in der Windkraftanlage, beispielsweise der Blattachse in einem Rotorblatt oder der Turmachse im Turm angeordnet sind.

Bei dem Bauelement der Windkraftanlage kann es sich z. B. um einen Rotor mit seinen abstehenden Rotorblättern, einem gegenüber dem Rotor feststehenden Maschinenhaus - auch als Gondel bezeichnet - oder um den Turm der Anlage handeln, auf dessen oberen Ende die Gondel drehbar gegenüber dem Turm gelagert ist. Die Messeinrichtung kann in einem lang gestreckten Hohlraum der oben bezeichneten Bauelemente angeordnet sein.

Die durch die aerodynamischen Belastungen auftretenden räumlichen Verschiebungen von Markierungen an der Reflektoroberfläche können somit von der Messeinrichtung detektiert und quantifiziert werden.

Zur genauen Bestimmung der aerodynamischen Belastungen, ist vor der eigentlichen Messung eine genaue Ausrichtung und Justierung einer Ausrichtfläche der Messeinrichtung zwischen der Sender / Empfängereinheit und dem Reflektor erforderlich, um Einflüsse des Messortes und des Messbereiches zu vermeiden. Ziel ist es, dass der nutzbare Messbereich in der Messeinrichtung der Verformungen am Messort entspricht. Die Messeinrichtung ist daher in einer Halterung angeordnet, die an gegenüberliegenden Seiten im Hohlraum befestigt ist und Einstellvorrichtungen zu genauen Justierung und Ausrichtung der Ausrichtfläche gegenüber der Halterung aufweist. Die Einstellbarkeit der Halterung ist zur Kompensation von Verstellungen der Messeinrichtung während der Installation erforderlich. Nach erfolgter Ausrichtung und Justierung bleibt die Messeinrichtung fixiert gegenüber der Ausrichtfläche des zugehörigen Reflektors. Alle nachfolgenden Bewegungen des Reflektors sind somit Folge der Verformungen auf Grund der aerodynamischen Belastungen des Bauelementes der Anlage, die gemessen werden sollen.

EP 2 453 136 A zeigt eine Ausricht- und Justiervorrichtung für eine Messeinrichtung innerhalb eines Hohlraumes in einem Rotor einer Windkraftanlage zur Messung von Verformungen, insbesondere eines am Rotor angeordneten Rotorblattes. Die Sende- / Empfangseinrichtung der Messeinrichtung ist in einem Gehäuse untergebracht, das an einer Halterung in dem Hohlraum des Rotors befestigt ist, wobei die Halterung als Zwischenplatte mit Zwischenraum über eine Dreipunktlagerung ausgeführt ist. Die Einstellung erfolgt für jede Lagerstelle über einstellbare Befestigungsschraubbolzen unter Zwischenlage einer Druckfeder. Eine Konterschraube sitzt in einer zusätzlichen Schraubbohrung der Zwischenplatte und wird nach Justierung des Gehäuses in Anlage an einer Ausrichtfläche gebracht, die der Zwischenplatte mit dem Zwischenraum gegenübersteht.

Nachteilig bei der oben beschriebenen Ausrichtung- und Justierung ist, das die Einstellung der Schraubbolzen separat für jede Lagerstelle extra und anschließend die genaue Positionierung über die Konterschraube erfolgen muss. Darüber hinaus müssen die mindestens drei Lagestellen gegenseitig austangiert werden. Die Justierung und Ausrichtung der Messeinrichtung ist daher ziemlich aufwendig und kann zu Ungenauigkeiten führen, so dass möglicherweise, Messergebnisse, die auf dieser Justierung und Ausrichtung basieren, ungenau oder verfälscht werden können.

Aus DE 1785791 U ist ein Stativhalterung für eine Aufnahmekamera bekannt mit einem in mehreren Richtungen verstellbaren Stativkopf und einer einstellbaren Reibungsbremse, dessen Bremsklotz mittels einer drehbaren Exzenterscheibe andrückbar ist.
DE 37 29 102 A zeigt eine einstellbare Lagerung, vorwiegend in der Gerätetechnik und dem Maschinenbau, die es ermöglicht, über Einstelllvorrichtungen Antriebs- und Übertragungselemente justierbar zu gestalten. Hierzu sind ein in axialer und radialer Richtung in drei Freiheitsgraden einstellbare Lagerbolzen exzentrisch gelagert, die eine Halterung der Antriebs- und Übertragungselemente in die gewünschte Lage justiert. Die Lagebolzen sind jeweils in einer oberen und unteren Exzenterbuchse gelagert, wobei der Lagerbolzen unten einen kugelförmigen Ansatz aufweist, der in einem Gewinde der dort angeordneten Exzenterbuches läuft, und oben in einem Schwenklager aufgenommen ist. Durch Drehen der lageveränderlichen Einstellelemente wird erreicht, dass gleichzeitig bzw. nacheinander die radiale und axiale Lage des Justageobjektes verändert wird.

Die Aufgabe der Erfindung besteht darin bei einer Windkraftanlage mit einer Messeinrichtung zu Messung von Verformungen einzelner Bauelemente der Anlage eine Halterung für die Messeinrichtung vorzuschlagen, die eine verbesserte Einstellvorrichtung zur genauen Justierung und Ausrichtung einer Ausrichtfläche der Messeinrichtung gegenüber der Halterung aufweist.

Die Lösung der Aufgabe erfolgt vorrichtungsmäßig durch die Merkmale des Anspruches 1 sowie verfahrensmäßig durch die Merkmale des Anspruches 9.

Die erfindungsgemäße Windkraftanlage weist als verstellbare Einstellvorrichtung einer Ausrichtfläche der Messeinrichtung gegenüber ihrer Halterung eine Exzenterdrehvorrichtung auf, mittels dessen die Messeinrichtung in der Halterung gelagert und gegenüber der Ausrichtfläche ausgerichtet bzw. justiert werden kann. Die Exzenterdrehvorrichtung umfasst an der Lagerstelle eine auf einer Welle angebrachte Steuerungsscheibe, deren Mittelpunkt außerhalb der Wellenachse liegt, wobei die Drehbewegung in eine translatorische Bewegung zur Verstellung der Messeinrichtung umgewandelt wird. Die Drehung der Exzentereinrichtung an ihren Lagerstellen in gleicher und /oder jeweils entgegengesetzte Richtungen bewirkt somit, dass die Halterung und damit die Messeinrichtung exakt in die gewünschte vertikale und horizontale Ebene ausgerichtet werden kann.

Diese durch Drehen bewirkte gleichzeitige horizontale und vertikale Abstandseinstellvorrichtung ist im Vergleich zu der bekannte Dreipunktlagerung mit der direkten translatorischen Einstellung mittels Befestigungsschraubbolzen, Druckfeder und Konterschrauben leichter zu handhaben. Die Messeinrichtung kann somit exakter und genauer für eine Messung von Verformungen eines Bauelementes der Windkraftanlage vorab justiert und eingestellt werden,

Die Exzenterdrehvorrichtung weist eine Exzenterscheibe mit einem Einstellrad auf, mindestens eine Kugelscheibe mit zugehöriger Kegelpfanne und einer Spannschraube auf, wobei vorteilhaft jeweils vor und hinter jeder Lagerstelle ein Kugelscheiben- und Kegelpfannenpaar vorzusehen sind. Mittels der Kugelscheiben oder Kegelpfannenanordnung an jeder Lagerstelle erfolgt die vertikale und horizontale Einstellung, wenn sich Spannelemente an nicht parallelem Flächen anpassen sollen. Sobald die Messeinrichtung in der vertikalen und horizontalen Ebene eingestellt ist, werden die Exzenterscheiben gegen Verdrehen gesichert. Dies kann z. B. durch am Gehäuse angeordnete Gewindestifte erfolgen. Die Exzenterscheibe ist an ihrer Lagerstelle als Einstellrad mit einer Grad- oder einer anderen geeigneten Markierung ausgeführt, mittels dessen sogar eine vorgegebene oder vorberechnete Stellung der Messeinrichtung manuell oder auch ferngesteuert eingestellt werden kann.

Die Messeinrichtung ist von einem Gehäuse umgeben, das Teil der Ausrichtfläche der Messeinrichtung ist. Die Halterung ist ortsfest am Einbauort des Bauelementes der Windkraftanlage befestigt. Nur die Messeinrichtung mit Gehäuse wird mittels der an den Lagerstellen angeordneten Exzenterdrehvorrichtungen in vertikaler und / oder horizontaler Richtung bewegt.

Die Gehäuseausführung ist dem Einsatzort der Messeinrichtung angepasst. Die Lagerung des Gehäuses erfolgt in Längsrichtung mittels an der Halterung angeordneten, gegenüberliegenden Bestigungsflansche, die vorzugsweise an den beiden Seitenflächen der Halterung angeordnet sind. Vorzugsweise sind in dem Gehäuse gemeinschaftlich auch Sende- und Empfangseinrichtung der Messeinrichtung untergebracht. Dies erspart eine zusätzliche Einstell- und Justiervorrichtung für den Sender oder dem Empfänger. Die Halterung kann beliebige Formen aufweisen, z. B als Platte mit an jeder Lagerstelle quer zur Ausrichtfläche angeordneten Befestigungsflanschen und als Lagerstelle mit den Einzelteilen der Exzenterdrehvorrichtung.

An weiteren Befestigungsflanschen der Halterung, quer zur Lagerrichtung und vorzugsweise gegenüberliegend, können weitere Stelleinrichtungen angeordnet sein, die zu einer verbesserte Lagestabilität der Messeinrichtung. Für diesen Verstellmechanismus ist jedoch keine Exzenterdrehvorrichtung erforderlich. Die Stellvorrichtung umfasst hier eine Stellschraube mit einer Kontermutter. Die Ausrichtfläche der Messeinrichtung kann somit grob in ihrer vertikalen Stellung voreingestellt werden. Nach Justierung und Ausrichtung durch die Exzenterdrehvorrichtung an den Lagerstellen wird anschließend die endgültige Position durch Festziehen der Kontermutter gesichert und rüttelfest gemacht.

Die Halterung kann mit den Befestigungsflanschen als Platte ausgebildet sein. In einer besonders vorteilhaften Weiterbildung der Erfindung weist die Halterung jedoch einen Ausschnitt auf, die der Ausrichtfläche gegenüberliegt, wobei die Messeinrichtung mit ihrer Rückseite den Ausschnitt teilweise oder ganz durchdringen kann. Durch die rahmenartige Anordnung können die auf der Rückseite angeordneten elektrischen Versorgungs- und Steuerleitungen ohne Beeinträchtigung der Ausrichtfläche angeschlossen werden. Des Weiteren wird durch diese Maßnahme der Ausricht- und Justierbereich der Messeinrichtung vergrößert.

Die Messeinrichtung zur Messung von Verformungen eines langgestreckten Bauelementes der Windkraftanlage ist bevorzugt innerhalb des Hohlraumes eines oder mehrerer Rotorblätter der Anlage angeordnet und als Blattsensor bekannt. Mittels der Messeinrichtung können somit Blattverformungen von quer zur Rotorachse angeordneten Rotorblattern oder eine Rotordurchbiegung festgestellt werden. Darüber hinaus sind die gemessenen Verformungen ein Indikator für aerodynamische Belastungen der Windkraftanlage. Ist die Messeinrichtung im Hohlraum des Turmes angeordnet, können damit Turmschwingungen und deren Auswirkungen auf die Rotorbelastung der Anlage beim Betrieb ausgewertet werden.

Die Messeinrichtung ist vorteilhaft als optische Messeinrichtung ausgeführt, wobei die Justierung und Ausrichtung der Sendeeinrichtung über eine Reflektoreinrichtung zu der Empfangseinrichtung erfolgt und die Sende- /Empfangseinrichtung als Kamera ausgeführt ist. Der Empfänger enthält wenigstens eine Abbildungsoptik, welche die Reflektoreinrichtung auf dem Empfänger oder einem Sensor abbildet. Nach der erfindungsgemäßen Ausrichtung und Justierung der Kameraposition kann die Abweichungen des Reflektorbildes als Biegung des Rotorblattes interpretiert werden.

Weitere Aspekte der Erfindung, Vorteile und Merkmale ergeben sich aus den abhängigen Ansprüchen der Vorrichtung, des Verfahrens sowie auch aus den Zeichnungen und der zugehörigen Beschreibung.

Die Erfindung wird im Folgenden an Hand eines Ausführungsbeispiels näher erläutert.
Fig.1 zeigt eine schematische Ansicht einer Windkraftanlage.
Fig. 2 zeigt eine allgemeine schematische und teilweise Darstellung eines Rotors der Windkraftanlage aus Fig. 1 mit einer in einem Rotorblatt angeordneten Messeinrichtung.
Fig. 3 zeigt in einer perspektivischen Darstellung die Messeinrichtung nach Fig. 2.
Fig. 4 zeigt eine Frontansicht der Anordnung nach Fig. 2.
Fig. 5 zeigt eine Draufsicht der Anordnung nach Fig.2.
Fig. 6 zeigt eine Schnittdarstellung von Fig. 4 entlang der Linie A-A
Fig. 7 zeigt eine Seitenansicht der Fig. 4.

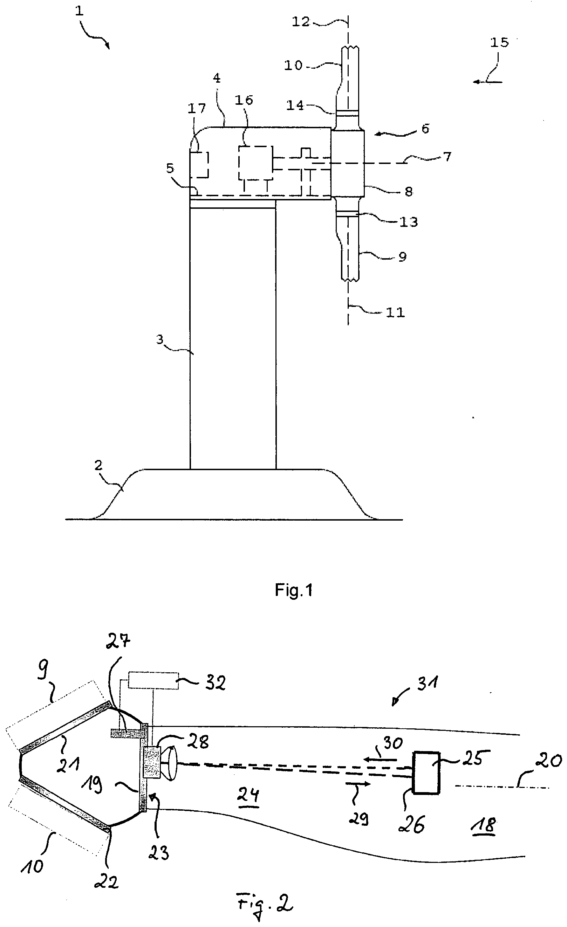

Aus Fig. 1 ist eine Windkraftanlage 1 ersichtlich, wobei ein auf einem Fundament 2 aufstehender Turm 3 an seinem dem Fundament 2 abgewandten Ende mit einem Maschinenhaus 4 verbunden ist. In dem Maschinenhaus 4 ist ein Maschinenträger 5 angeordnet, an dem ein Rotor 6 um eine Rotorachse 7 drehbar gelagert ist, der eine Rotornabe 8 und damit verbundene Rotorblätter 9 und 10 aufweist, die jeweils um ihre Blattachsen 11, 12 relativ zur Rotornabe 8 drehbar sind. Jedes Rotorblatt 9, 10 ist mit einem Verstellantrieb 13, 14 mechanisch gekoppelt, mittels welchem das jeweilige Rotorblatt 9, 10 um die zugehörige Blattachse 11, 12 gedreht und mechanisch mit einem elektrischen Generator 16 gekoppelt ist, der in dem Maschinenhaus 4 angeordnet und an dem Maschinenträger 5 befestigt ist und die auf die einzelnen Rotorblätter wirkende Windkraft 15 zum größten Teil in elektrische Energie umwandelt. Für den kontrollierten Betrieb der Windkraftanlage 1 ist eine übergeordnete Windkraftanlagensteuerung 17 vorgesehen, mittels welcher unter anderem die Verstellantriebe 13, und 14 gesteuert werden.

Fig. 2 zeigt eine schematische und teilweise Darstellung des Rotors 6 in Blickrichtung aus Fig. 1, wobei an der Rotornabe 8 ein drittes Rotorblatt 18 mittels eines Blattlagers 19 drehbar gelagert ist. Die Rotorblätter 9 und 10 weisen ebenfalls Blattlager 21 und 22 auf, wie aus Fig. 2 ersichtlich ist. In Fig. 1 ist das Rotorblatt 18 durch die Rotornabe 8 verdeckt. Wie die Rotorblätter 9 und 10 ist auch das Rotorblatt 18 mit einem schematisch angedeuteten Blattwinkelverstellantrieb 27 mechanisch gekoppelt und mittels diesem um die Blattachse 20 drehbar.

Fig. 2 zeigt ferner eine Messanordnung 31 für die Messung der Verformung eines Rotorblattes der Windkraftanlage 1, die ganz oder teilweise in dem Rotor 6 integriert ist. Mittels der anordnung 31 wird eine aerodynamische Belastung des Rotorblattes 18 gemessen. Das am Blattlager 19 befestigte Ende des Rotorblattes 18 wird als Blattwurzel 23 bezeichnet.

Die Messanordnung 31 arbeitet auf der Basis eines optischen Systems und umfasst eine als Kamera ausgebildete Messeinrichtung 28, die als kombinierte Sende- und Empfangseinrichtung Lichtsignale 29, 30 zu einem in einem Hohlraum 24 des Rotorblattes 18 angeordneten Reflektor 25 sendet, der im Abstand zur Blattwurzel 23, die ankommende Signale von der Kamera 28 empfängt, sie an seiner dem ankommenden Signal zugewandten Oberfläche 26 reflektiert und sie dann an die Kamera 28 zurücksendet. Die von der Lichtquelle erzeugten Strahlen 29 (Signale) erzeugen auf dem Reflektor 25 eine Lichtmarkierung, die sich durch die Blattverformung räumlich auf der Reflektoroberfläche 26 verschiebt. Die verschobene Markierung wird über den reflektierten Lichtstrahl 30 in der Kamera 28 registriert. Die Daten der Verformung werden zu einer mit der Kamera 28 verbundenen Rechen- und Signalverarbeitungseinrichtung 32 übertragen und in Messgrößen umgeformt, die als Stellgröße für den dem Verstellantrieb 27 und über eine nicht dargestellte Verbindung mit der Windkraftanlagensteuerung 17 für andere Betriebsparameter verwendet werden.

Die Kamera 28 ist im Bereich des Blattlagers 19 angeordnet und weist einen zur Blattwurzel 23 festen Bezugspunkt auf. Damit wird verhindert, dass mögliche Kamerabewegungen beim Messvorgang auf das Ergebnis Einfluss nehmen. Das auf den Reflektor 25 auftreffende Signal erzeugt auf dessen Oberfläche 26 eine Markierung. Durch die aerodynamische Belastung wird das Blatt 18 verformt, wobei sich die Verformung in einer Verschiebung der Markierung auf der Reflektoroberfläche 26 auswirkt. Diese Verschiebung wird in der Messeinrichtung 28 registriert.

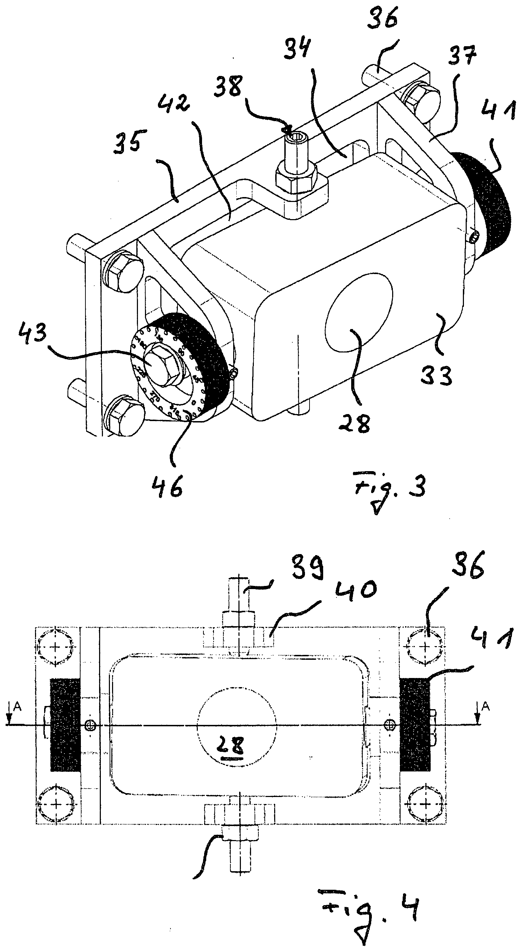

Einzelheiten der Messeinrichtung bzw. Kamera 28 werden im Folgenden anhand der aus Fig. 3 und folgender beschrieben. Die Kamera 28 ist zum besseren Schutz in einem Gehäuse 33 mit einer in Richtung des Reflektors 25 gerichtete Ausrichtfläche 34 angeordnet. Das Gehäuse 33 weist ferner eine Halterung 35 auf, die mittels z.B. Befestigungsschrauben 36 oder anderswie im Hohlraum 24 der Rotorblattes 18 mit der Blattwurzel 23 fest verbunden ist.

Die Kamera 28 ist in Längsrichtung in der mittels zwei an der Halterung 35 angeordneten, gegenüberliegenden Bestigungsflansche 37 gelagert, die an den beiden Seitenflächen der Halterung 35 in Richtung des Reflektors 25 herausragen. Quer zur Lagerrichtung und auch gegenüberliegend sind zwei zusätzliche Stelleinrichtungen 38 angeordnet mit Stellschrauben 39 mit Kontermuttern 40. Durch diese Anordnung kann die Ausrichtfläche der Kamera 28 grob in ihrer vertikalen Stellung voreingestellt werden.

Vor der eigentlichen Messung der Verformung des Rotorblattes 18, bedingt durch aerodynamische Einflüsse, ist eine genaue Ausrichtung und Justierung der Kamera 28 gegenüber der Halterung 35 notwendig. Die Einstellbarkeit der Halterung ist zur Kompensation von Verstellungen der Kamera 28 während der Installation erforderlich. Nach erfolgter Ausrichtung und Justierung bleibt sie fixiert gegenüber der Ausrichtfläche des zugehörigen Reflektors. Alle nachfolgenden Bewegungen des Reflektors 25 sind somit Folge der Verformungen auf Grund der aerodynamischen Belastungen des Bauelementes der Anlage, die gemessen werden sollen.

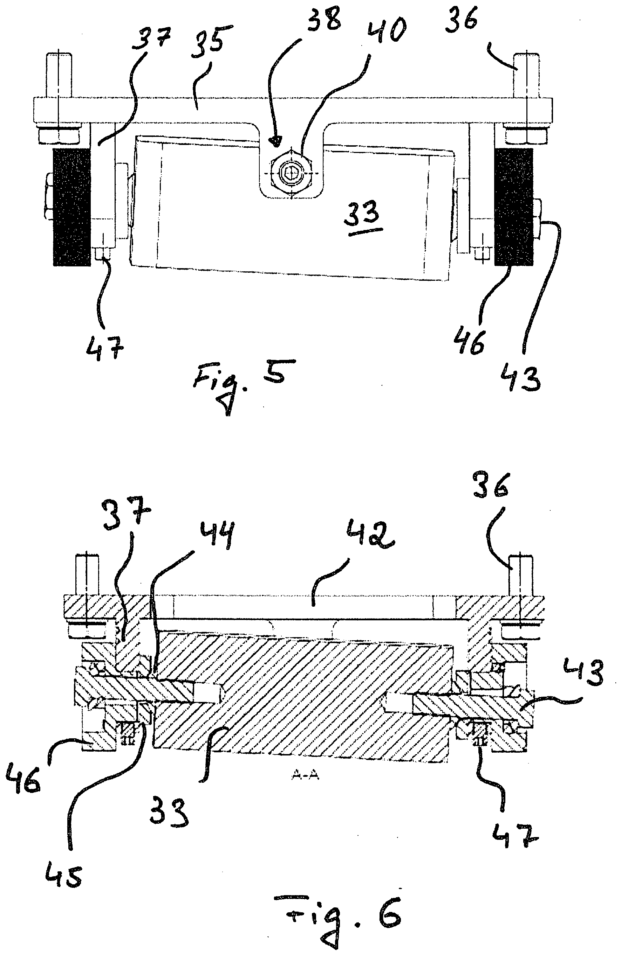

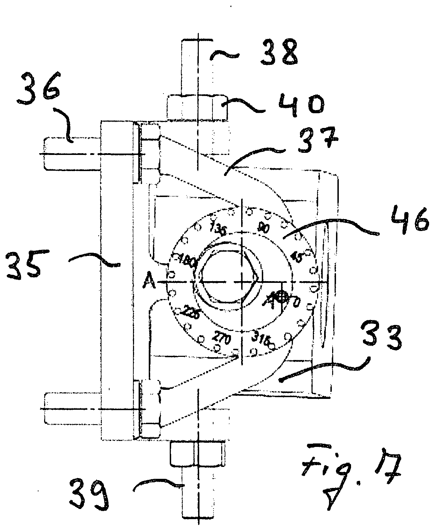

Erfindungsgemäß erfolgt die Ausrichtbarkeit und Justierung der Kamera 28 durch eine Exzenterdrehvorrichtung 41 an den beiden Lagerstellen des Kameragehäuses 33 mit der Halterung. Durch Drehen der Exzenterdrehvorrichtung 41wird somit die Ausrichtfläche 34 der Kamera 28 gegenüber der ortsfesten Halterung 35 in allen Richtungen verstellbar, wie dies aus den Fig. 6 und 7 ersichtlich ist. Nach Justierung und Ausrichtung durch die Exzenterdrehvorrichtung 41 an den Lagerstellen wird anschließend die endgültige Position durch Festziehen der Kontermuttern gesichert und rüttelfest gemacht.

Die Halterung 35 ist nicht als Platte ausgebildet, sondern weist einen Ausschnitt 42 auf, die der Ausrichtfläche 34 gegenüberliegt. Die Abmessung des Ausschnittes 42 ist so gestaltet, das das Gehäuse 33 mit seiner Rückseite den Ausschnitt 42 teilweise oder ganz durchdringen kann. Durch diese rahmenartige Anordnung des Gehäuses können die auf der Rückseite der Kamera 28 angeordneten elektrischen Versorgungs- und Steuerleitungen ohne Beeinträchtigung der Ausrichtfläche 34 angeschlossen werden.

Fig. 4 zeigt eine Frontansicht der Anordnung aus Fig. 2, bestehend aus Kamera 28, Gehäuse 33 und Halterung 35 mit den beiden den seitlich angeordneten Exzenterdrehvorrichtungen 41 an den Lagerstellen und den quer dazu gegenüberliegend angeordneten Stelleinrichtungen 38 mit den Stellschrauben 39 und den Kontermuttern 40.

Der Verstellmechanismus der Exzentervorrichtung sowie der Aufbau der Einrichtung 41 sind den Fig. 5 und 6 zu entnehmen. Fig. 5 zeigt eine Draufsicht der Anordnung nach Fig.2. In dieser Darstellung ist die Verstellmöglichkeit mittels der Exzenterdrehvorrichtung 41 in der vertikalen Ebene ersichtlich.

Fig. 6 zeigt in einer Schnittdarstellung A-A der Fig. 4 die Verstellmöglichkeit der Kamera 28 in der Horizontalen. Fig. 7 zeigt eine Seitenansicht der Fig. 2. Die Exzenterdrehvorrichtung 41 weist an jeder Lagerstelle eine als Einstellrad ausgeführte Exzenterscheibe 46 auf, die mittels einer Spannschraube 43 mit den seitliche Befestigungsflansche 37 der Halterung 35 verbunden ist. Vor und hinter jeder Lagerstelle ist jeweils ein Kugelscheiben- und Kegelpfannenpaar vorgesehen, wobei eine Kugelscheibe mit dem Bezugszeichen 44 und die zugehörige Kegelpfanne mit dem Bezugszeichen 45 versehen ist. Die durch Drehen der Exzenterscheiben 46 eingestellte Position der Kugelscheibe 44 zur Kegelpfanne 45 wird durch eine als Gewindestift ausgestaltete Feststellschraube 47 gesichert, die quer zur Spannschraube 43 angeordnet ist.

Durch die Anordnung der Exzenterdrehvorrichtung wird mittels Drehen der beiden Exzenterscheiben 46 in gleicher oder entgegengesetzter Richtung die Kamera 28 sowohl horizontal als auch vertikaler ausgerichtet. Nach der erfolgten horizontalen und vertikalen Ausrichtung der Kamera 28, werden die beiden Exzenterscheiben 46 durch die beiden Feststellschrauben 47 gegen Verdrehen gesichert. An den beiden gegenüberliegenden Stelleinrichtungen 38 werden durch Drehen der beiden Stellschrauben die Kamera 28 in der horizontalen Richtung eingestellt und mittels der Kontermutter 40 gegen Verdrehen gesichert. Ist die Kamera 28 korrekt eingestellt, werden die beiden Spannschrauben 43 an der Exzenterdreheinrichtung festgezogen. Zusätzlich können noch die beiden Exzenterscheiben 46 mit den zwei Feststellschrauben 47 gegen Verdrehen gesichert werden.

**Bezugszeichenliste**

| | | | |
|---|---|---|---|
| 1 | Windkraftanlage | 25 | Reflektor |
| 2 | Fundament | 26 | Oberfläche |
| 3 | Turm | 27 | Blattwinkelverstellantrieb |
| 4 | Maschinenhaus | 28 | Messeinrichtung, Kamera |
| 5 | Maschinenträger | 29 | Signalverlauf |
| 6 | Rotor | 30 | Signalverlauf |
| 7 | Rotorachse | 31 | Messanordnung |
| 8 | Rotornabe | 32 | Signalverarbeitungseinheit |
| 9 | Rotorblatt | 33 | Gehäuse |
| 10 | Rotorblatt | 34 | Ausrichtfläche |
| 11 | Blattachse | 35 | Halterung |
| 12 | Blattachse | 36 | Befestigungsschraube |
| 13 | Blattwinkelverstellantrieb | 37 | Befestigungsflansch |
| 14 | Blattwinkelverstellantrieb | 38 | Stelleinrichtung |
| 15 | Windkraft | 39 | Stellschraube |
| 16 | Generator | 40 | Kontermutter |
| 17 | Windkraftanlagensteuerung | 41 | Exzenterdrehvorrichtung |
| 18 | Rotorblatt | 42 | Ausschnitt |
| 19 | Blattlager | 43 | Spannschraube |
| 20 | Blattachse | 44 | Kugelscheibe |
| 21 | Blattlager | 45 | Kegelpfanne |
| 22 | Blattlager | 46 | Exzenterscheibe |
| 23 | Blattwurzel | 47 | Feststellschraube |
| 24 | Hohlraum | | |

## Patentansprüche

1. Windkraftanlage mit einem Rotor (6), der mindestens ein senkrecht zur Rotorachse (7) sich erstreckenden Rotorblatt (9, 10, 18) aufweist, einem gegenüber dem Rotor (6) feststehenden Maschinenhaus (4), das auf einem Turm (3) gelagert ist, und mit mindestens einer Messeinrichtung (28) zur Messung von Verformungen einzelner oder mehrerer langgestreckter Bauelemente der Windkraftanlage (1), wobei die Messeinrichtung (28) in mindestens einem Hohlraum (24) innerhalb eines Bauelementes der Windkraftanlage (1) angeordnet ist, Teil einer Sende- /Empfangseinrichtung mit einer entfernt dazu angeordneter Reflektoreinrichtung (25) ist, in einer Halterung (35) gelagert ist, die an gegenüberliegenden Seiten des Hohlraumes (24) befestigt ist, und Einstellvorrichtungen (41, 38) zur genauen Justierung und Ausrichtung einer Ausrichtfläche (34) der Messeinrichtung (28) gegenüber der Halterung (35) aufweist,
**dadurch gekennzeichnet, dass** die Einstellvorrichtung (41, 38) eine Exzenterdrehvorrichtung (41) an ihrer Lagerstelle aufweist, mittels dessen die Messeinrichtung (28) in der Halterung (35) gelagert, und durch Drehen der Exzenterdrehvorrichtung (41) die Messeinrichtung (28) gegenüber ihrer Ausrichtfläche (34) ausrichtbar und justierbar ist, wobei die Exzenterdrehvorrichtung (41) an jeder Lagerstelle eine Exzenterscheibe (46) mit einem Einstellrad, mindestens eine Kugelscheibe (44) mit zugehöriger Kegelpfanne (45) und eine Spannschraube (43) umfasst und die Messeinrichtung (28) von einem Gehäuse (33) umgeben ist, das in Längsrichtung mittels gegenüberliegenden, an Seitenflächen der Halterung (35) angeordnete Befestigungsflansche (37) gelagert ist und Teil der Ausrichtfläche (34) der Messeinrichtung (28) ist.

2. Windkraftanlage nach Anspruch 1, **dadurch gekennzeichnet, dass** die Sende- und Empfangseinrichtungen gemeinsam von dem Gehäuses (33) umfasst sind.

3. Windkraftanlage nach Anspruch 1 oder 2, **dadurch gekennzeichnet, dass** die Halterung (35) ortsfest am Einbauort des Bauelementes der Windkraftanlage (1) angeordnet ist und die Messeinrichtung (28) mit dem Gehäuse (33) gegenüber der Halterung (35) in horizontaler und/ oder vertikaler Richtung einstellbar und justierbar ist.

4. Windkraftanlage nach einem oder mehreren der vorherigen Ansprüche, **dadurch gekennzeichnet, dass** quer und gegenüberliegend zur Lagerrichtung der Halterung (35) die Messeinrichtung (28) jeweils zusätzliche Stelleinrichtungen (38) aufweist.

5. Windkraftanlage nach Anspruch 4, **dadurch gekennzeichnet, dass** die zusätzliche Stelleinrichtungen (38) jeweils eine Stellschraube (39) mit einer Kontermutter (40) umfasst.

6. Windkraftanlage nach einem oder mehreren der vorherigen Ansprüche, **dadurch gekennzeichnet, dass** die Halterung (35) einen Ausschnitt (42) aufweist, welcher der Ausrichtfläche (34) gegenüberliegt und die Rückseite der Messeinrichtung (28) teilweise oder ganz durchdringen kann.

7. Windkraftanlage nach einem oder mehreren der vorherigen Ansprüche, **dadurch gekennzeichnet, dass** das langestreckte Bauelement ein Rotorblatt (9, 10, 18) und / oder den Turm (3) der Anlage umfasst.

8. Windkraftanlage nach einem oder mehreren der vorherigen Ansprüche, **dadurch gekennzeichnet, dass** die Messeinrichtung (28) eine optische Messeinrichtung mit einer Kamera (28) als Sende- /Empfangseinrichtung umfasst.

9. Verfahren zur Justierung und Ausrichtung der Messeinrichtung (28) einer Windkraftanlage (1) nach einem oder mehreren der Ansprüche 1 bis 8, **dadurch gekennzeichnet, dass** durch Drehen der Exzenterdrehvorrichtung (41) die Messeinrichtung (28) in horizontaler und vertikaler Richtung ausgerichtet wird, wobei die Drehung mittels Drehen der Exzenterscheiben (46) in gleicher oder entgegengesetzter Richtung erfolgt und die Ausrichtung und Justierung der Messeinrichtung (28) durch eine Schwenkbewegung der Messeinrichtung (28) bzw. des Gehäuses (33) gegenüber der ortfesten Halterung (35) erfolgt.

10. Verfahren nach Anspruch 9, **dadurch gekennzeichnet, dass** nach der Ausrichtung die Exzenterscheiben (46) mittels Spannschrauben (43) gegen Verdrehen gesichert werden.

11. Verfahren nach Anspruch 9 oder 10, **dadurch gekennzeichnet, dass** durch Drehen der beiden Stellschrauben (39) an den Stelleinrichtungen (38) die Messeinrichtung (28) in die vertikale Richtung eingestellt wird und mit Kontermuttern in der eingestellten Position gesichert wird.

12. Verfahren nach Anspruch 9 bis 11, **dadurch gekennzeichnet, dass** die Justierung und Ausrichtung der Sendeeinrichtung über die Reflektoreinrichtung (25) zu der Empfangseinrichtung erfolgt.

## Claims

1. Wind turbine comprising a rotor (6), which has at least one rotor blade (9, 10, 18) extending perpendicularly to the rotor axis (7), a nacelle (4) which is fixed with respect to the rotor (6) and is mounted on a tower (3), and comprising at least one measuring device (28) for measuring deformations of individual or multiple elongate components of the wind turbine (1), the measuring device (28) being arranged in at least one hollow space (24) inside a component of the wind turbine (1), being part of a sending/receiving device having a reflector device (25) arranged remotely therefrom, being mounted in a support (35) which is fastened on opposite sides of the hollow space (24), and having adjusting devices (41, 38) for precise adjustment and orientation of an orienting face (34) of the measuring device (28) with respect to the support (35),
**characterised in that** the adjusting device (41, 38) has an eccentric gear rotation device (41) at the bearing point thereof, by means of which the measuring device (28) is mounted in the support (35), and the measuring device (28) can be oriented and adjusted with respect to the orienting face (34) thereof by rotating the eccentric gear rotation device (41), the eccentric gear rotation device (41) having, at each bearing point, an eccentric disc (46) having an adjustment wheel, at least one spherical washer (46) having an associated ball socket (45) and a tensioning screw (43), and the measuring device (28) being surrounded by a housing (33) which is mounted in the longitudinal direction by means of opposing mounting flanges (37) which are arranged on lateral faces of the support (35) and being part of the orienting face (34) of the measuring device (28).

2. Wind turbine according to Claim 1, **characterised in that** the sending and receiving devices are jointly comprised by the housing (33).

3. Wind turbine according to either Claim 1 or 2, **characterised in that** the support (35) is arranged in a stationary manner in the mounting location of the component of the wind turbine (1), and the measuring device (28), together with the housing (33), can be adjusted and aligned in the horizontal and/or vertical direction with respect to the support (35).

4. Wind turbine according to one or more of the preceding claims, **characterised in that**, transversely to and opposite the bearing direction of the support (35), the measuring device (28) comprises additional adjusting devices (38) in each case.

5. Wind turbine according to Claim 4, **characterised in that** the additional adjusting devices (38) each comprise an adjusting screw (39) having a lock nut (40).

6. Wind turbine according to one or more of the preceding claims, **characterised in that** the support (35) has a cut-out (42) which is opposite the orienting face (34) and can penetrate the rear side of the measuring device (28) in part or in full.

7. Wind turbine according to one or more of the preceding claims, **characterised in that** the elongate component comprises a rotor blade (9, 10, 18) and/or the tower (3) of the turbine.

8. Wind turbine according to one or more of the preceding claims, **characterised in that** the measuring device (28) comprises an optical measuring device having a camera (28) as a sending/receiving device.

9. Method for adjusting and orienting the measuring device (28) of a wind turbine (1) according to one or more of Claims 1 to 8, **characterised in that**, by rotating the eccentric gear rotation device (41), the measuring device (28) is oriented in the horizontal and vertical direction by rotating the eccentric gear rotation device (41), the rotation taking place by means of rotation of the eccentric discs (46) in the same or opposite directions, and the orientation and adjustment of the measuring device (28) takes place by a pivoting movement of the measuring device (28) or of the housing (33) with respect to the stationary support (35).

10. Method according to Claim 9, **characterised in that** after the orientation, the eccentric discs (46) are secured against twisting by means of tensioning screws (43).

11. Method according to either Claim 9 or 10, **characterised in that** by rotating the two adjusting screws (39) on the adjusting devices (38), the measuring device (28) is adjusted in the vertical direction and is secured in the adjusted position by lock nuts.

12. Method according to Claims 9 to 11, **characterised in that** the adjustment and orientation of the sending device takes place via the reflector device (25) relative to the receiving device.

## Revendications

1. Éolienne avec un rotor (6), qui comprend au moins une pale de rotor (9, 10, 18) s'étendant perpendiculairement à l'axe du rotor (7), un carter de machine (4), fixe par rapport au rotor (6), qui est logé sur une tour (3), et avec au moins un dispositif de mesure (28) pour la mesure de déformations de certains ou plusieurs composants allongés de l'éolienne (1), le dispositif de mesure (28) étant disposé dans au moins une cavité (24) à l'intérieur d'un composant de l'éolienne (1), faisant partie d'un dispositif d'émission/réception avec un dispositif de réflecteur (25) disposé à distance de celui-ci, étant logé dans un support (35) fixé sur des côtés opposés de la cavité (24) et comprenant des dispositifs de réglage (41, 38) pour l'ajustement et l'alignement précis d'une surface d'alignement (34) du dispositif de mesure (28) par rapport au support (35),
**caractérisée en ce que** le dispositif de réglage (41, 38) comprend, au niveau de son palier, un dispositif de rotation excentrique (41) qui permet de loger le dispositif de mesure (28) dans le support (35) et, par rotation du dispositif de rotation excentrique (41), d'aligner et d'ajuster le dispositif de mesure (28) par rapport à sa surface d'alignement (34), le dispositif de rotation excentrique (41) comprenant, au niveau de chaque palier, un disque excentrique (46) avec une roue de réglage, au moins une rondelle sphérique (44) avec un coussinet sphérique (45) correspondant et une vis de serrage (43) et le dispositif de mesure (28) étant entouré d'un boîtier (33) qui est logé dans la direction longitudinale au moyen de brides de fixation (37) opposées disposées sur des surfaces latérales du support (35) et faisant partie de la surface d'alignement (34) du dispositif de mesure (28).

2. Éolienne selon la revendication 1, **caractérisée en ce que** les dispositifs d'émission et de réception sont inclus conjointement dans le boîtier (33).

3. Éolienne selon la revendication 1 ou 2, **caractérisée en ce que** le support (35) est disposé de manière fixe à l'endroit d'installation du composant de l'éolienne (1) et le dispositif de mesure (28) peut être réglé et ajusté avec le boîtier (33) par rapport au support (35) dans la direction horizontale et/ou verticale.

4. Éolienne selon l'une ou plusieurs des revendications précédentes, **caractérisée en ce que** le dispositif de mesure (28) comprend des dispositifs de réglage (38) supplémentaires transversaux et opposés par rapport à la direction des paliers du support (35).

5. Éolienne selon la revendication 4, **caractérisée en ce que** les dispositifs de réglage (38) supplémentaires comprennent chacun une vis de réglage (39) avec un contre-écrou (40).

6. Éolienne selon l'une ou plusieurs des revendications précédentes, **caractérisée en ce que** le support (35) présente une découpe (42) opposée à la surface d'alignement (34) et pouvant traverser partiellement ou entièrement le côté arrière du dispositif de mesure (28).

7. Éolienne selon l'une ou plusieurs des revendications précédentes, **caractérisée en ce que** le composant allongé comprend une pale de rotor (9, 10, 18) et/ou la tour (3) de l'installation.

8. Éolienne selon l'une ou plusieurs des revendications précédentes, **caractérisée en ce que** le dispositif de mesure (28) comprend un dispositif de mesure optique avec une caméra (28) en tant que dispositif d'émission/réception.

9. Procédé d'ajustement et d'alignement du dispositif de mesure (28) d'une éolienne (1) selon l'une ou plusieurs des revendications 1 à 8, **caractérisé en ce que** la rotation du dispositif de rotation excentrique (41) permet d'aligner le dispositif de mesure (28) dans la direction horizontale et la direction verticale, cette rotation ayant lieu grâce à la rotation des disques excentriques (46) dans la même direction ou dans des directions opposées et l'alignement et l'ajustement du dispositif de mesure (28) ayant lieu grâce au mouvement de pivotement du dispositif de mesure (28) ou du boîtier (33) par rapport au support fixe (35).

10. Procédé selon la revendication 9, **caractérisé en ce que**, après l'alignement, les disques excentriques (46) sont protégés contre une rotation au moyen de vis de serrage (43).

11. Procédé selon la revendication 9 ou 10, **caractérisé en ce que** la rotation des deux vis de serrage (39) au niveau des dispositifs de réglage (38) permet de régler le dispositif de mesure (28) dans la direction verticale et de le sécuriser dans la position réglée avec des contre-écrous.

12. Procédé selon la revendication 9 à 11, **caractérisé en ce que** l'ajustement et l'alignement du dispositif d'émission par rapport au dispositif de réception a lieu grâce au dispositif réflecteur (25).
